(19) Europäisches Patentamt

European Patent Office

Office européen des brevets

(11) Veröffentlichungsnummer: **0 325 736**
**A2**

(12) **EUROPÄISCHE PATENTANMELDUNG**

(21) Anmeldenummer: **88120127.1**

(22) Anmeldetag: **02.12.88**

(51) Int. Cl.⁴: **F16B 1/00**

(30) Priorität: **23.01.88 DE 3801909**

(43) Veröffentlichungstag der Anmeldung:
**02.08.89 Patentblatt 89/31**

(84) Benannte Vertragsstaaten:
**AT CH DE ES FR GB IT LI NL SE**

(71) Anmelder: **NETTER GMBH**
**Hasengartenstrasse 40 Postfach 44 46**
**D-6200 Wiesbaden(DE)**

(72) Erfinder: **Netter, Francis**
**Matthias-Claudius-Strasse 17**
**D-6200 Wiesbaden(DE)**

(74) Vertreter: **Weber, Dieter, Dr. et al**
**Dr. Dieter Weber und Dipl.-Phys. Klaus**
**Seiffert Patentanwälte**
**Gustav-Freytag-Strasse 25 Postfach 6145**
**D-6200 Wiesbaden 1(DE)**

(54) **Maschinenelementebefestigung.**

㊼ Die Erfindung betrifft eine Maschinenelemente-befestigung, bei der das eine Maschinenelement (1) mittels einer oder mehrerer Befestigungselemente (2) mit dem anderen Maschinenelement verbindbar ist.

Es ist Aufgabe vorliegender Erfindung, eine Maschinenelementebefestigung der genannten Art zu schaffen, die es ermöglicht, in einem breiten Rahmen auch solche Maschinenelemente zu befestigen, die unterschiedliche Lochbilder aufweisen.

Gelöst wird die Aufgabe dadurch, daß eines der Maschinenelemente (1) mit einer Bohrung (3) versehen ist, in die eine runde Platte (4) mit einem von der Plattenmitte (5) bis zum Rand reichenden Langloch (6) verdrehbar eingesetzt ist, und das jeweilige Befestigungselement (2) kraftschlüssig das Langloch und die Ausnehmung in dem anderen Maschinenele-ment durchsetzt.

FIG. 1

## Maschinenelementebefestigung

Die Erfindung betrifft eine Maschinenelementebefestigung, insbesondere Antriebs- Getriebe- Befestigung, bei der das eine Maschinenelement mittels einer oder mehrerer Befestigungselemente, insbesondere Befestigungsbolzen oder -schrauben, mit dem anderen Maschinenelement verbindbar ist.

Unterschiedliche Lochbilder für Befestigungselemente an Maschinenelementebefestigungen, insbesondere Antriebs- Getriebe-Befestigungen bedingen unterschiedliche Befestigungsbohrungen. Hat jeder Hersteller andere Lochbilder für seine Maschinenelemente so bedeutet dies, daß sie nicht beliebig austauschbar sind. Die Kosten für neue Bohrbilder an bestehenden Anlagen sind hoch beim Wechsel auf einen anderen Lieferanten. Zudem fallen Zeichnungsänderungskosten an. Der Wettbewerb unter den Herstellern der Maschinenelemente wird erschwert oder verhindert.

Es ist Aufgabe der Erfindung, eine Maschinenelementebefestigung der genannten Art zu schaffen, die es ermöglicht in einem breiten Rahmen auch solche Maschinenelemente zu befestigen, die unterschiedliche Lochbilder aufweisen.

Gelöst wird die Aufgabe dadurch, daß eines der Maschinenelemente mit einer Bohrung versehen ist, in das eine runde Platte mit einem von der Plattenmitte bis zum Rand reichenden Langloch verdrehbar eingesetzt ist, und das jeweilige Befestigungselement kraftschlüssig das Langloch und die Ausnehmung im anderen Maschinenelement durchsetzt.

Durch die Ausbildung der erfindungsgemäßen Maschinenelementebefestigung besteht die Möglichkeit, das Befestigungselement über die ganze Länge des Langloches zu plazieren, das heißt von der Plattenmitte bis nahe an den Plattenrand und darüber hinaus infolge der Verdrehmöglichkeit der Platte in der Bohrung auch beliebig innerhalb des durch die Abmessungen des Langloches vorgegebenen größten Durchmessers. Innerhalb dieses Durchmessers kann somit jedes beliebige Lochbild hergestellt werden, die kraftschlüssige Verbindung zwischen den Maschinenelementen kann dabei auf unterschiedlichste Art und Weise bewerkstelligt werden, beispielsweise indem die Bohrung in dem einen Maschinenelement und die Platte in Richtung des anderen Maschinenelementes konisch verjüngend ausgebildet sind oder aber die Bohrung in dem einen Maschinenelement mit einer den Bohrungsquerschnitt in Richtung des anderen Maschinenelementes verengenden Stufe versehen ist und die Platte eine entsprechende Stufe aufweist.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigt:

Figur 1 eine schematische Darstellung einer Vier-Punkt-Befestigung zur Verdeutlichung des prinzips der erfindungsgemäßen Maschinenelementebefestigung,

Figur 2 einen Längsschnitt durch eines der Maschinenelemente im Bereich einer Befestigung mit konisch ausgebildeter Platte und

Figur 3 einen Schnitt entsprechend Figur 2, bei der die Platte stufenförmig ausgebildet ist.

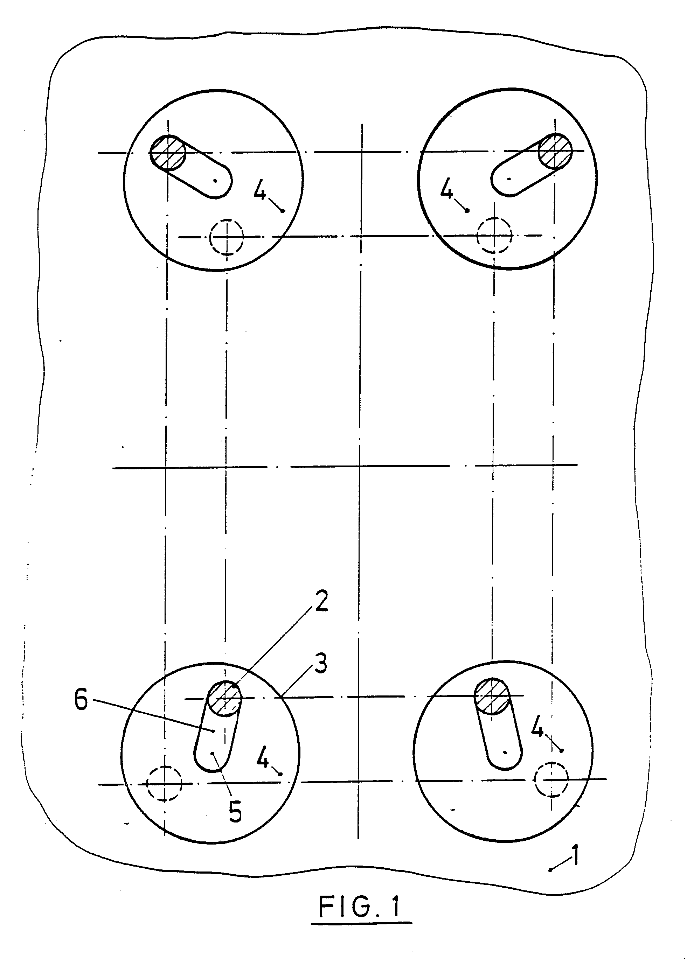

Figur 1 zeigt in einem Ausschnitt den Befestigungsflansch 1 eines nicht näher dargestellten Antriebes, der mittels vier Befestigungsbolzen 2 an einem gleichfalls nicht näher dargestellten Bauteil angeflanscht werden soll. Die Befestigungsbolzen sind der Einfachheit halber nur in der Darstellung der Figur 1 durch ihren Bolzenquerschnitt verdeutlicht, sie sind in ihren jeweiligen Endbereichen mit Gewindeabschnitten versehen, auf die Muttern zum gegenseitigen Verspannen der beiden Maschinenelemente (Antrieb und Bauteil ) aufgeschraubt werden.

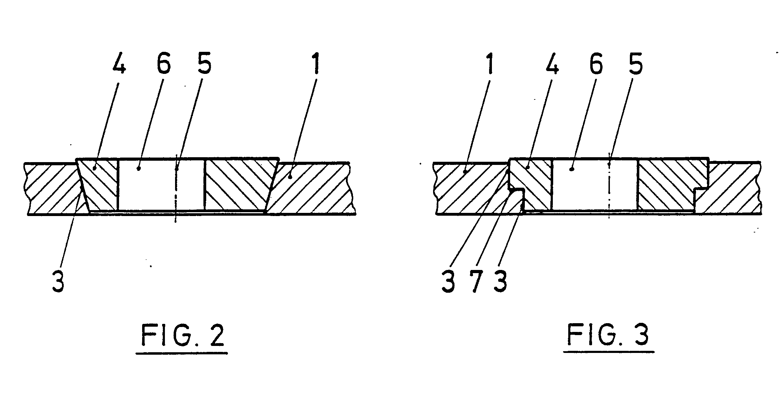

Im Bereich jedes Befestigungspunktes ist der Befestigungsflansch 1 mit einer runden Bohrung 3 versehen, in die eine runde Platte 4 mit einem von der Plattenmitte 5 bis zum Rand oder nahezu bis zum Rand reichenden Langloch 6 verschwenkbar eingesetzt ist. Wie der Darstellung der Figuren 2 und 3 zu entnehmen ist, kann die Bohrung 3 und die Platte 4 unterschiedlich gestaltet sein, bei der Ausführungsform nach der Figur 2 ist die Bohrung 3 und entsprechend die Platte 4 konisch verjüngend ausgebildet, bei der Ausführungsform nach der Figur 3 weisen Bohrungen und Platte zwei Bereiche unterschiedlichen Durchmessers auf, so daß die stufenförmig ausgebildete Platte an einer Stufe 7 der Bohrung zu liegen kommt.

Die beiden Maschinenelemente werden so miteinander in Anlage gebracht, daß das die Platte aufnehmende eine Maschinenelement im Bereich des verjüngten Endes der Platte benachbart zum anderen Maschinenelement zu liegen kommt. Durch Verdrehen der Platte in der Bohrung kann jedes beliebige Lochbild innerhalb des sich durch die Abmessungen des Langloches ergebenden Durchmessers hergestellt werden, beispielsweise die in der Figur 1 mit gestrichelten Linien gezeigte Position oder die durch den befestigungsbolzen 2 definierte weitere Position, oder gar eine solche Stellung, in der der Befestigungsbolzen 2 die Platte 4 im Bereich der Plattenmitte 5 durchsetzt. Für die beiden erstgenannten Stellungen sind in der Figur 1 für alle vier Befestigungsstellen die entsprechenden Lochbilder mit strichpunktierten Linien verdeutlicht. Bei einer kraftschlüssigen Verbindung der beiden Maschinenelemente wird die entsprechende Platte fest in die Bohrung eingepreßt, so daß ein Verdrehen der Platte ausgeschlossen ist.

## Ansprüche

1. Maschinenelementebefestigung, insbesondere Antriebs-Getriebe-Befestigung, bei der das eine Maschinenelement mittels einer oder mehrerer Befestigungselemente, insbesondere Befestigungsbolzen oder -schrauben, mit dem anderen Maschinenelement verbindbar ist,
**dadurch gekennzeichnet,** daß eines der Maschinenelemente (1) mit einer Bohrung (3) versehen ist, in die eine runde Platte (4) mit einem von der Plattenmitte (5) bis zum Rand reichenden Langloch (6) verdrehbar eingesetzt ist, und das jeweilige Befestigungselement (2) kraftschlüssig das Langloch (6) und die Ausnehmung im anderen Maschinenelement durchsetzt.

2. Maschinenelementebefestigung nach Anspruch 1, dadurch gegekennzeichnet, daß die Bohrung (3) im einen Maschinenelement und die Platte (4) in Richtung des anderen Maschinenelementes konisch verjüngend ausgebildet sind.

3. Maschinenelementebefestigung nach Anspruch 1, dadurch gekennzeichnet, daß die Bohrung (3) in einem Maschinenelement (1) mit einer den Bohrungsquerschnitt in Richtung des anderen Maschinenelementes mit verengenden Stufe (7) versehen ist und die Platte (4) eine entsprechende Stufe aufweist.

FIG. 1

FIG. 2

FIG. 3